# EUROPÄISCHE PATENTSCHRIFT

(11) **EP 0 663 309 B1**
(45) Veröffentlichungstag und Bekanntmachung des Hinweises auf die Patenterteilung: **20.09.1995**
(21) Anmeldenummer: 93120557.9
(22) Anmeldetag: 20.12.1993
(51) Int. Cl.: B60H 1/00, B60H 1/24, F24F 1/00

(54) **Heiz- bzw. Klimagerät, insbesondere zum Einbau in ein Kraftfahrzeug**
Heating or airconditioning device, in particular for installation in a motorvehicle
Dispositif de chauffage ou de climatisation, en particulier pour l'installation dans un véhicule automobile

(43) Veröffentlichungstag der Anmeldung: 19.07.1995
(73) Patentinhaber: SIEMENS AKTIENGESELLSCHAFT, 80333 München (DE)
(72) Erfinder: Hildebrand, Reinhard, D-96257 Redwitz (DE); Petters, Siegfried, D-96479 Weitramsdorf. (DE)

(56) Entgegenhaltungen:
- EP-A- 0 397 997
- DE-A- 2 526 780
- DE-U- 8 715 554
- FR-A- 2 583 000
- FR-A- 2 631 896

## Beschreibung

Die Erfindung bezieht sich auf ein Heiz- bzw. Klimagerät, insbesondere zum Einbau in ein Kraftfahrzeug, gemäß Anspruch 1.

Ein Klimagerät mit den beiden ersten Merkmalen des Anspruchs 1 ist z.B. durch die EP-A-0 397 997 bekannt; bei dem bekannten Klimagerät mit luftseitiger Temperatureinstellung wird der von einem Gebläse am Eingang des Gerätegehäuses geförderte Luftstrom in einem Luftkanal zunächst über einen in den Einbauraum des Gerätegehäuses eingesetzten Verdampfer, dann entweder direkt als Kaltluft oder über einen Wärmetauscher als Warmluft in eine frontraumseitige Mischkammer gefördert und anschließend entsprechend der Vorgabe eines Lufttemperatur-Einstellelementes am Bediengerät im Frontraum des Kraftfahrzeugs und entsprechender Stellung einer Mischluftklappe in der frontraumseitigen Mischkammer als temperierbare Luft zu einem Defrost-Luftauslaß und/oder einem Fußraum-Luftauslaß und/oder einem Mittelebene-Luftauslaß weitergeleitet. Zur Komfortsteigerung ist im bekannten Fall auch eine in ähnlicher Weise eingangsseitig gespeiste Fondraum-Mischkammer vorgesehen, über die temperierbare Luft in die Mittelebene bzw. in den Fußraum des Fondraums förderbar ist.

Durch die FR-A-2 583 000 ist eine Kraftfahrzeug-Heizungsanlage mit einem Radialgebläse und einem diesem nachgeordneten Wärmetauscher bekannt, bei der zur gleichmäßigen Luftbeaufschlagung des Wärmetauschers und zur Geräuschminderung eine profilierte Gitterwand in dem Diffusor des Radialgebläses derart angeordnet ist, daß zumindest ein Abschnitt der profilierten Gitterwand in Richtung auf das Radialgebläse in den Diffusor hineinragt.

Gemäß Aufgabe vorliegender Erfindung soll nach dem sogenannten "Gleichteile-Konzept" unter Benutzung möglichst vieler unveränderter Bauteile eines Klimagerätes ein Heizgerät geschaffen werden, bei dem auf den Einbau und Anschluß eines Verdampfers verzichtet wird, das jedoch optimale Betriebseigenschaften, insbesondere hinsichtlich eines guten Wirkungsgrades und einer hohen Geräuscharmut, gewährleistet; die Lösung dieser Aufgabe gelingt erfindungsgemäß durch die Lehre des Anspruchs 1; vorteilhafte Ausgestaltungen der Erfindung sind jeweils Gegenstand der Unteransprüche.

Es hat sich gezeigt, daß durch den erfindungsgemäß vorgesehenen Einsatz einer Luftleitvorrichtung in den Einbauraum des bei einem Klimagerät dort eingesetzten Verdampfers ansonsten strömungstechnisch ungünstige und geräuschverursachende Luftbewegungen vermieden und trotz eines an sich den Durchgangskanal im Bereich des Einbauraums für den Verdampfer teilweise versperrenden Bauteils durch die gezielten austrittsseitigen Luftströme oberhalb bzw. unterhalb der Luftleitvorrichtung der Luftdurchsatz erhöht und unerwünschte Geräuschbildungen vermieden werden können.

Zweckmäßigerweise werden die Luftleitvorrichtungen derart angeordnet bzw. ausgebildet, daß der einströmende Luftstrom in einen ersten ausgangsseitigen Luftstrom in Richtung auf einen in dem Gerätegehäuse angeordneten Wärmetauscher und einen zweiten ausgangsseitigen Luftstrom in Richtung auf eine Luftmischkammer ausgebildet ist, in der dem Kaltluftstrom mit Hilfe einer verstellbaren Mischluftklappe der vom Wärmetauscher austretende Warmluftstrom beimischbar ist. In fertigungs- bzw. montagetechnisch vorteilhafter Weise ist die Luftleitvorrichtung mit entlang einer Längsachse angeordneten und im wesentlichen quer zu der Längsachse gerichteten Luftleitelementen versehen und quer zu dem einströmenden Luftstrom in Richtung ihrer Längsachse seitlich in den Einbauraum für den Verdampfer einsteckbar und in ihrer Betriebsendlage fixierbar, wobei nach einer Ausgestaltung der Erfindung an den Stirnseiten der Luftleitvorrichtung Halterungs-Steckaufnahmen an- bzw. eingeformt sind, die an korrespondierenden Steckaufnahmen in dem Einbauraum fixierbar sind.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1-4: jeweils im Längsschnitt eines Gerätegehäuses vier unterschiedliche Ausführungen einer in den Einbauraum für den Verdampfer seitlich eingesteckten Luftleitvorrichtung;
- FIG 5-8: verschiedene Ausgestaltungen der Luftleitvorrichtung in jeweils perspektivischer Einzeldarstellung.

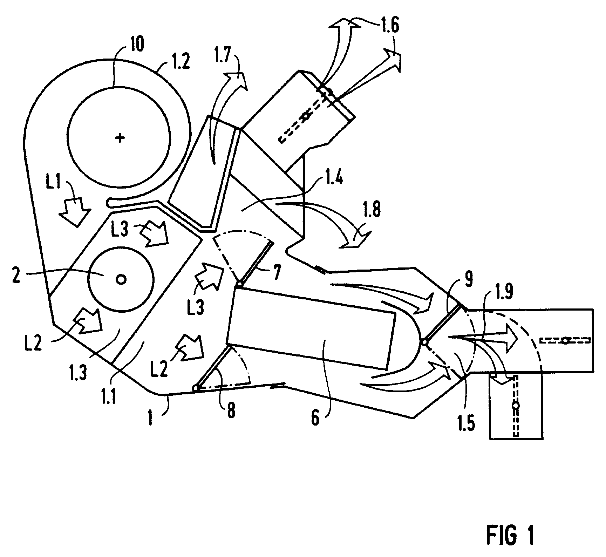

FIG 1-4 zeigen in einem Seitenschnitt ein Kunststoff-Gerätegehäuse 1, das nach dem "Gleichteile-Konzept" sowohl für ein Heizgerät als auch für ein Heiz- und Klimagerät, insbesondere zum Einbau in ein Kraftfahrzeug, verwendbar ist. Der Durchgangskanal 1.1 für die Luftströmung führt von einem eingangsseitigen Ventilator 10 mit einem spiralförmigen Ventilatorgehäuseteil 1.2 durch einen Einbauraum 1.3 für einen bei Verwendung als Klimagerät eingesteckten, den gesamten Einbauraum 1.3 ausfüllenden Verdampfer, dann je nach Stellung einer Absperrklappe 8 bzw. einer frontraumseitigen Mischluftklappe 7 direkt und/oder auf dem Umweg über einen Wärmetauscher 6 in eine frontraumseitige Mischkammer 1.4 und von dieser zu einem Front-Mittelebeneluftauslaß 1.6, einem Front-Defrostluftauslaß 1.7. bzw. einem Front-Fußraumluftauslaß 1.8. Die Mischluftklappe 7 ist zur unterschiedlichen Temperierung der aus der frontraumseitigen Mischkammer 1.4 austretenden Luftströmungen zwischen einer ersten Endstellung mit vollständiger Absperrung eines Frischluftzutritts und einer zweiten Endstellung mit vollständiger Absperrung eines Warmluftzutritts verstellbar. Zur weiteren Komfortsteigerung ist eine fondraumseitige Mischkammer 1.5 vorgesehen, in der je nach Stellung einer fondraumseitigen Mischluftklappe 9 mehr oder weniger Kaltluft von der Eingangsseite des Wärmetauschers 6 bzw. Warmluft von der Ausgangsseite des Wärmetauschers 6 einem Fond-Mittelebenenluftauslaß bzw. Fond-Fußraumluftauslaß 1.9 zuführbar ist.

FIG 1-4 zeigen die Bestückung des Gerätegehäuses 1 zum Einsatz für ein Heizgerät, bei der bei ansonsten identischen Bauteilen in den Einbauraum 1.3 für den Verdampfer jeweils eine Luftleiteinrichtung 2 bzw. 3 bzw. 4 bzw. 5 seitlich eingesteckt ist. Die jeweilige Luftleitvorrichtung 2 bzw. 3 bzw. 3 bzw. 4 bzw. 5 ist mit im wesentlichen quer zu dem einströmenden Luftstrom L1 gerichteter Längsachse seitlich in den Einbauraum 1.3 einsteckbar und in ihrer Betriebsendlage fixierbar und derart ausgeführt, daß in vorteilhafter Weise ein gezielter erster ausgangsseitiger Luftstrom L2 unterhalb der Luftleitvorrichtung in Richtung auf den Wärmetauscher 6 bzw. ein gezielter zweiter ausgangsseitiger Luftstrom L3 oberhalb der Luftleitvorrichtung in Richtung auf die Mischkammer 1.4 gebildet sind. Die Anwendung und erzielbaren Vorteile vorliegender Erfindung sind dabei nicht auf die dargestellte Luftansaugung an der Einströmseite beschränkt; anstelle eines mittigen Ventilators kann auch eine seitenversetzte Anordnung bzw. ein Luftzutritt durch einen seitlich mündenden Kanal vorgesehen werden; in gleicher Weise ist die Luftkanalgestaltung hinter dem Einbauraum für den Verdampfer nicht eng an das dargestellte Ausführungsbeispiel gebunden.

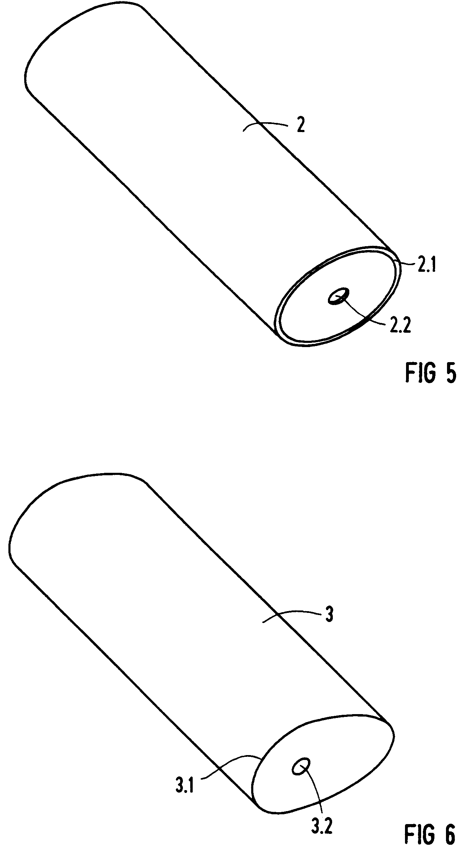

Erfindungsgemäße Ausgestaltungen der Luftleitvorrichtungen zeigen die Einzeldarstellungen gemäß FIG 5-8.

FIG 1 bzw. insbesondere FIG 5 zeigen eine erste Luftleitvorrichtung 2 aus einem quer zu einem einströmenden Luftstrom L1 angeordneten, vorzugsweise als Hohlkörper gespritzten, zylinderförmigen Kunststoff-Walzenkörper 2 mit oberhalb bzw. unterhalb des Walzenkörpers 2 abgeleitetem erstem bzw. zweitem ausgangsseitigem Luftstrom L2 bzw. L3.

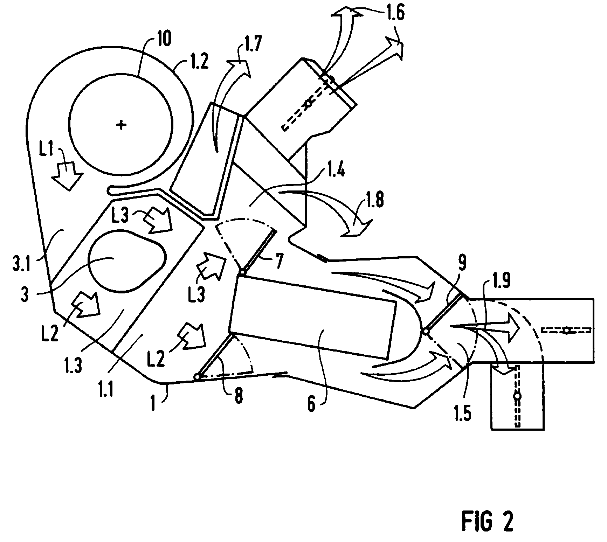

FIG 2 und insbesondere FIG 6 zeigen eine Luftleitvorrichtung 3 aus einem mit seiner Breitseite 3.1 quer zu einem einströmenden Luftstrom L1 angeordneten ellipsenförmigen Walzenkörper 3 mit oberhalb bzw. unterhalb des Walzenkörpers 3 abgeleitetem erstem bzw. zweitem ausgangsseitigem Luftstrom L2 bzw. L3.

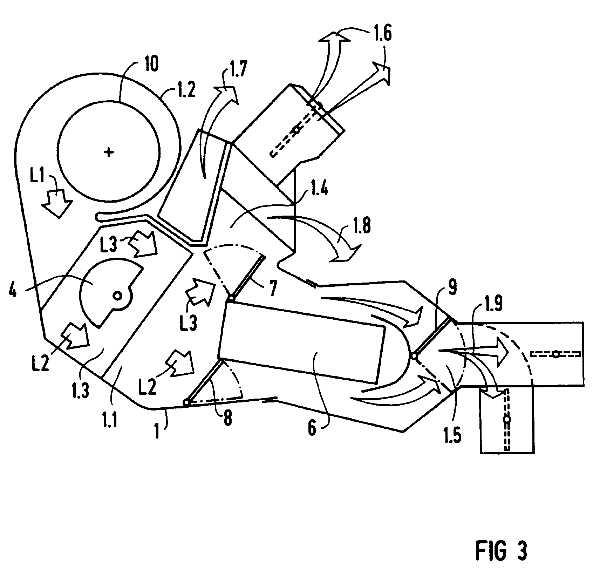

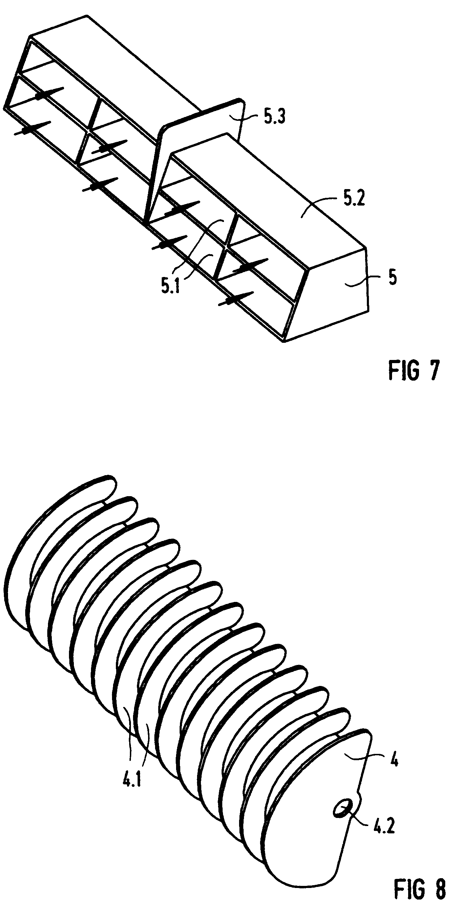

FIG 3 und insbesondere FIG 8 zeigen eine Luftleitvorrichtung aus einem quer zu dem einströmenden Luftstrom L1 angeordneten, vorzugsweise halbzylinderförmigen Walzenkörper 4 mit auf seinem gegen den einströmenden Luftstrom L1 gerichtetem Zylindermantelteil angeordneten Vertikal-Luftleitrippen 4.1 und oberhalb bzw. unterhalb des Walzenkörpers 4 abgeleitetem Luftstrom L2 bzw. L3.

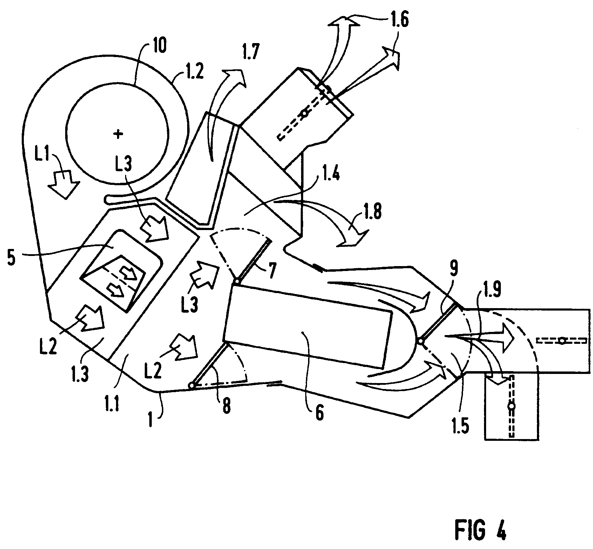

FIG 4 und insbesondere FIG 7 zeigen eine Luftleitvorrichtung mit einem quer zu dem einströmenden Luftstrom L1 angeordneten Luftleitgitter 5 mit in Richtung des Durchgangskanals 1.1 verlaufenden, die durchströmende Luftmenge vergrößernden Durchströmungskammern 5.1 und oberhalb bzw. unterhalb eines Luftleitgitter-Rahmens 5.2 abgeleitetem, erstem bzw. zweitem ausgangsseitigem Luftstrom L1 bzw. L3, wobei eine zusätzliche Luftleitung ähnlich wie im Falle der Vertikal-Luftleitrippen beim Ausführungsbeispiel gemäß FIG 8 durch zumindest einen mittigen Luftleitsteg 5.3 erreichbar ist, der in vorteilhafter Weise dazu beiträgt, einen gegebenenfalls seitenunsysetrisch einströmenden Luftstrom (L1) in weitgehend gleiche laminare Luftstromanteile zur linken Fahrzeugseite einerseits und rechten Fahrzeugseite andererseits bereits bei Eintreten in die frontraumseitige Mischkammer 1.4 aufzuteilen.

Die Luftleitvorrichtungen weisen - wie insbes. aus FIG 5-8 ersichtlich - vorzugsweise in Einsteckrichtung verlaufende Halterungs-Steckaufnahmen 2.3;3.2;4.2 auf, mit denen sie an korrespondierenden, hier nicht dargestellten, Steckgegenaufnahmen in dem Einbauraum 1.3 an Wandteilen des Gerätegehäuses 1 arretierbar sind.

Zur zusätzlichen Geräuschminderung ist in vorteilhafter Weise - wie insbes. in FIG 5 angedeutet - vorgesehen, die luftleitenden Oberflächen der Luftleitvorrichtung mit einer geräuschabsorbierenden, insbesondere aufgespritzten, Oberfläche 2.1 zu versehen.

## Patentansprüche

1. Heiz- bzw. Klimagerät, insbesondere zum Einbau in ein Kraftfahrzeug, mit folgenden Merkmalen:
In einem Gerätegehäuse (1) ist ein Durchgangskanal (1.1) angeordnet, in dem ein einströmender Luftstrom (L1) zu zumindest einem Luftauslaß (1.6;1.7;1.8;1.9), insbesondere im Fahrgastraum eines Fahrzeuges, förderbar ist;
in den Durchgangskanal (1.1) ist ein Einbauraum (1.3) zum Einsatz eines Verdampfers bei Verwendung des Gerätegehäuses (1) für ein Klimagerät angeordnet;
in den Einbauraum (1.3) ist bei Verwendung des Gerätegehäuses (1) für ein Heizgerät eine Luftleitvorrichtung (2;3;4;5) im Sinne einer wirbelfreien Luftführung eingesetzt;
die Luftleitvorrichtung (2;3;4;5) ist im wesentlichen quer zu dem einströmenden Luftstrom (L1) im Sinne eines ersten ausgangsseitigen Luftstroms (L2) unterhalb der Luftleitvorrichtung und eines zweiten ausgangsseitigen Luftstroms (L3) oberhalb der Luftleitvorrichtung angeordnet bzw. ausgebildet.

2. Heiz- bzw. Klimagerät nach Anspruch 1 mit dem Merkmal:
Die Luftleitvorrichtung (2;3;4;5) ist im Sinne eines ersten ausgangsseitigen Luftstroms (L2) in Richtung auf einen in dem Gerätegehäuse (1) angeordneten Wärmetauscher (6) bzw. eines zweiten ausgangsseitigen Luftstroms (L3) in Richtung auf eine Luftmischkammer (1.4) ausgebildet.

3. Heiz- bzw. Klimagerät nach Anspruch 1 und/oder 2 mit dem Merkmal:
Die Luftleitvorrichtung (2;3;4;5) weist entlang einer Längsachse angeordnete und im wesentlichen quer zu der Längsachse gerichtete Luftleitelemente auf;
die Luftleitvorrichtung (2;3;4;5) ist mit einer im wesentlichen quer zu dem einströmenden Luftstrom (L1) gerichteter Längsachse seitlich in den Einbauraum (1.3) für den Verdampfer einsteckbar und in ihrer Betriebsendlage fixierbar.

4. Heiz- bzw. Klimagerät nach einem der Ansprüche 1-3 mit dem Merkmal:
Die Luftleitvorrichtung besteht aus einem im wesentlichen quer zu dem einströmenden Luftstrom (L1) angeordneten zylinderförmigen Walzenkörper (2) mit oberhalb bzw. unterhalb des Walzenkörpers (2) abgeleitetem erstem bzw. zweitem ausgangsseitigem Luftstrom (L2 bzw. L3).

5. Heiz- bzw. Klimagerät nach einem der Ansprüche 1-3 mit dem Merkmal:
Die Luftleitvorrichtung besteht aus einem mit seiner Breitseite (3.1) im wesentlichen quer zu dem einströmenden Luftstrom (L1) angeordneten ellipsenförmigen Walzenkörper (3) mit oberhalb bzw. unterhalb des Walzenkörpers (3) abgeleitetem erstem bzw. zweitem ausgangsseitigem Luftstrom (L2 bzw. L3).

6. Heiz- bzw. Klimagerät nach einem der Ansprüche 1-3 mit dem Merkmal:
Die Luftleitvorrichtung besteht aus einem im wesentlichen quer zu dem einströmenden Luftstrom (L1) angeordneten, vorzugsweise halbzylinderförmigen Walzenkörper (4) mit auf seinem gegen den einströmenden Luftstrom (L1) gerichteten Zylindermantelteil angeordneten Vertikal-Luftleitrippen (4.1) und oberhalb bzw. unterhalb des Walzenkörpers (4) abgeleitetem Luftstrom (L2 bzw. L3).

7. Heiz- bzw. Klimagerät nach einem der Ansprüche 1-3 mit dem Merkmal:
Die Luftleitvorrichtung besteht aus einem im wesentlichen quer zu dem einströmenden Luftstrom (L1) angeordneten Luftleibgitter (5) mit in Richtung des Durchgangskanals (1.1) gerichteten Durchströmungskammern (5.1) und oberhalb bzw. unterhalb eines Luftleitgitter-Rahmens (5.2) abgeleitetem, erstem bzw. zweitem ausgangsseitigem Luftstrom (L2 bzw. L3).

8. Heiz- bzw. Klimagerät nach Anspruch 7 mit dem Merkmal:
Die Luftleitvorrichtung enthält zumindest einen, vorzugsweise mittig angeordneten, in Richtung des Durchgangskanals (1.1) gerichteten Luftleitsteg (5.3) oberhalb des Luftleitgitter-Rahmens (5.2) im Sinne einer vergleichmäßigten Luftführung sowohl zu einem rechten als auch zu einem linken Fahrzeugteil über die Mischkammer 1.4 und zumindest den Front-Mittelebeneluftauslaß 1.6.

9. Heiz- bzw. Klimagerät nach einem der Ansprüche 1-8 mit dem Merkmal:
Die Luftleitvorrichtung (2;3;4;5) besteht jeweils aus einem Kunststoffteil, insbesondere einem Kunststoffspritzgußteil.

10. Heiz- bzw. Klimagerät nach einem der Ansprüche 1-9 mit dem Merkmal:
Die luftleitenden Oberflächen der Luftleitvorrichtung (2;3;4;5) sind mit einer geräuschabsorbierenden, insbesondere aufgespritzten, Oberfläche (2.1) versehen.

11. Heiz- bzw. Klimagerät nach einem der Ansprüche 1-10 mit dem Merkmal:
Die Luftleitvorrichtung (2;3;4;5) weist, vorzugsweise in Einsteckrichtung, Halterungs-Steckaufnahmen (2.2;3.2; 4.2) zur Arretierung mit korrespondierenden Steckgegenaufnahmen in dem Einbauraum (1.3) auf.

## Claims

1. Heating and air-conditioning apparatus, in particular for installation in a motor vehicle, having the following features:
in an apparatus housing (1) there is disposed a through-passage (1.1) in which an inflowing air current (L1) can be conveyed to at least one air outlet (1.6; 1.7; 1.8; 1.9), in particular in the passenger compartment of a vehicle;
in the through-passage (1.1) is disposed an installation space (1.3) for the insertion of an evaporator when the apparatus housing (1) is used for an air-conditioning apparatus;
in the installation space (1.3), when the apparatus housing (1) is used for a heating apparatus, there is inserted an air-conducting device (2; 3; 4; 5) with a view to turbulence-free air guidance;
the air-conducting device (2; 3; 4; 5) is disposed or configured essentially transversely to the inflowing air current (L1) with a view to a first outflow-side air current (L2) beneath the air-conducting device and with a view to a second outflow-side air current (L3) above the air-conducting device.

2. Heating and air-conditioning apparatus according to Claim 1, having the feature:
the air-conducting device (2; 3; 4; 5) is configured, with a view to a first outflow-side air current (L2), in the direction of a heat exchanger (6) disposed in the apparatus housing (1) or, with a view to a second outflow-side air current (L3), in the direction of an air-mixing chamber (1.4).

3. Heating and air-conditioning apparatus according to Claim 1 and/or 2, having the feature:
the air-conducting device (2; 3; 4; 5) exhibits air-conducting elements disposed along a longitudinal axis and directed essentially transversely to the longitudinal axis;
the air-conducting device (2; 3; 4; 5) can be inserted, with a longitudinal axis directed essentially transversely to the inflowing air current (L1), laterally into the installation space (1.3) for the evaporator and can be fixed in its operating end position.

4. Heating and air-conditioning apparatus according to one of Claims 1-3, having the feature:
the air-conducting device comprises a cylindrical roller body (2), disposed essentially transversely to the inflowing air current (L1), having a first and second outflow-side air current (L2 and L3) diverted respectively above and below the roller body (2).

5. Heating and air-conditioning apparatus according to one of Claims 1-3, having the feature:
the air-conducting device comprises an elliptical roller body (3), disposed with its broad side (3.1) essentially transversely to the inflowing air current (L1), having a first and second outflow-side air current (L2 and L3) diverted respectively above and below the roller body (3).

6. Heating and air-conditioning apparatus according to one of Claims 1-3, having the feature:
the air-conducting device comprises a preferably semi-cylindrical roller body (4), disposed essentially transversely to the inflowing air current (L1), having vertical air-conducting ribs (4.1), which are disposed on its cylinder casing part directed towards the inflowing air current (L1), and an air current (L2 and L3) diverted respectively above and below the roller body (4).

7. Heating and air-conditioning apparatus according to one of Claims 1-3, having the feature:
the air-conducting device comprises an air-conducting grille (5) disposed essentially transversely to the inflowing air current (L1), having flow-through chambers (5.1) directed in the direction of the through-passage (1.1) and a first and second outflow-side air current (L2 and L3) diverted respectively above and below an air-conducting grille frame (5.2).

8. Heating and air-conditioning apparatus according to Claim 7, having the feature:
the air-conducting device contains at least one, preferably centrally disposed air-conducting bar (5.3) above the air-conducting grille frame (5.2), which air-conducting bar is directed in the direction of the through-passage (1.1), with a view to a standardized air guidance both to a right and to a left vehicle part via the mixing chamber (1.4) and at least the front centreplane air outlet (1.6).

9. Heating and air-conditioning apparatus according to one of Claims 1-8, having the feature:
the air-conducting device (2; 3; 4; 5) comprises respectively a plastics part, in particular a plastics injection-moulded part.

10. Heating and air-conditioning apparatus according to one of Claims 1-9, having the feature:
the air-conducting surfaces of the air-conducting device (2; 3; 4; 5) are provided with a sound-absorbing, in particular sprayed-on surface (2.1).

11. Heating and air-conditioning apparatus according to one of Claims 1-10, having the feature:
the air-conducting device (2; 3; 4; 5) exhibits, preferably in the direction of insertion, mounting plug fixtures (2.2; 3.2; 4.2) for locking retention with corresponding plug mating fixtures in the installation space (1.3).

## Revendications

1. Installation de chauffage ou de climatisation, destinée notamment à être montée dans un véhicule automobile, présentant les caractéristiques suivantes :
dans une enveloppe (1) de l'installation est disposé un canal de passage (1.1), dans lequel un courant d'air affluent (L1) peut être entraîné en direction d'au moins une sortie d'air (1.6; 1.7; 1.8; 1.9), notamment dans l'habitacle d'un véhicule;
dans le canal de passage (1.1) est disposé une chambre de montage (1.3) pour l'installation d'un évaporateur dans le cas de l'utilisation d'une enveloppe (1) pour une installation de climatisation;
dans la chambre de montage (1.3) est monté, dans le cas d'utilisation de l'enveloppe (1) de l'installation pour une installation de chauffage, un dispositif de guidage de l'air (2;3;4;5) servant à réaliser un guidage de l'air sans tourbillon;
le dispositif de guidage de l'air (2;3;4;5) est disposé ou formé essentiellement transversalement au courant d'air affluent (L1) pour la formation d'un premier courant d'air (L2) situé côté sortie, au-dessous du dispositif de guidage de l'air, et pour la formation d'un second courant d'air (L3) situé côté sortie au-dessus du dispositif de guidage de l'air.

2. Installation de chauffage et de climatisation suivant la revendication 1 présentant la caractéristique suivante :
le dispositif (2;3;4;5) de guidage de l'air est agencé pour la formation d'un premier courant d'air (L2) côté sortie en direction d'un échangeur de chaleur (6) disposé dans l'enveloppe (1) de l'installation, ou d'un second courant d'air (L3) situé côté sortie en direction d'une chambre (1.4) de mélange de l'air.

3. Installation de chauffage et de climatisation suivant la revendication 1 et/ou 2 présentant les caractéristiques suivantes :
le dispositif (2;3;4;5) de guidage de l'air comporte des éléments de guidage de l'air, qui sont disposés le long d'un axe longitudinal et s'étendent essentiellement transversalement à l'axe longitudinal;
le dispositif (2;3;4;5) de guidage de l'air peut, par un axe longitudinal dirigé essentiellement transversalement au courant d'air affluent (L1), être enfilé latéralement dans la chambre de montage (1.3) pour l'évaporateur, et peut être immobilisé dans sa position définitive de fonctionnement.

4. Installation de chauffage et de climatisation suivant l'une des revendications 1 à 3, présentant la caractéristique suivante :
le dispositif de guidage de l'air est constitué d'un corps de cylindre (2) cylindrique disposé essentiellement transversalement au courant d'air affluent (L1) avec un premier ou un second courant d'air (L2 ou L3) présent côté sortie, qui est évacué au-dessus ou au-dessous du corps de cylindre (2).

5. Installation de chauffage et de climatisation suivant l'une des revendications 1 à 3, présentant la caractéristique suivante :
le dispositif de guidage de l'air est constitué d'un corps de cylindre (3) elliptique disposé essentiellement transversalement au courant d'air affluent (L1), avec un premier ou un second courant d'air situé côté sortie (L2 ou L3), évacué au-dessus ou au-dessous du corps de cylindre (3).

6. Installation de chauffage et de climatisation suivant l'une des revendications 1 à 3, présentant la caractéristique suivante :
le dispositif de guidage de l'air est constitué d'un corps de cylindre de préférence semi-cylindrique (4) disposé essentiellement transversalement au courant d'air arrivant (L1) et comportant des nervures verticales de guidage de l'air (4.1), disposées sur sa partie latérale cylindrique dirigée vers le courant d'air affluent (L1), et avec un courant d'air (L2 ou L3) évacué au-dessus ou au-dessous du corps de cylindre (4).

7. Installation de chauffage et de climatisation suivant l'une des revendications 1 à 3 présentant la caractéristique suivante :
le dispositif de guidage de l'air est constitué d'une grille (5) de guidage de l'air, qui est disposée essentiellement transversalement au courant d'air affluent (L1) et comporte des chambres de passage (5.1), qui sont dirigées dans la direction du canal de passage (1.1), et avec un premier ou second courant d'air (L2 ou L3) présent côté sortie et qui est évacué au-dessus ou au-dessous d'un cadre (5.2) de la grille de guidage de l'air.

8. Installation de chauffage et de climatisation suivant la revendication 7, présentant la caractéristique suivante :
le dispositif de guidage de l'air comporte au moins une réglette de guidage de l'air (5.3), disposée de préférence au milieu et dirigée dans la direction du canal de passage (1.1), au-dessus du cadre (5.2) de la grille de guidage de l'air, en vue de l'obtention d'un guidage uniformisé de l'air, aussi bien vers une partie de droite que vers une partie de gauche du véhicule par l'intermédiaire de la chambre de mélange (1.4) et au moins de la sortie d'air (1.6) du plan médian frontal.

9. Installation de chauffage et de climatisation suivant l'une des revendications 1 à 8, présentant la caractéristique suivante :
le dispositif (2;3;4;5) de guidage de l'air est constitué d'une pièce en matière plastique, notamment une pièce en matière plastique moulée par injection.

10. Installation de chauffage et de climatisation suivant l'une des revendications 1 à 9, présentant la caractéristique suivante :
les surfaces de guidage de l'air du dispositif de guidage (2;3;4;5) de l'air sont pourvues d'une surface (2.1), qui absorbe les bruits, notamment moulée par injection.

11. Installation de chauffage et de climatisation suivant l'une des revendications 1 à 10, présentant la caractéristique suivante :
le dispositif (2;3;4;5) de guidage de l'air comporte, de préférence dans la direction dans laquelle il est enfilé, des logements de fixation à enfichage (2.2; 3.2; 4.2) pour le blocage, avec des logements à enfichage antagonistes correspondants présents dans l'espace de montage (1.3).
